# EUROPEAN PATENT SPECIFICATION

(11) **EP 0 671 638 B1**
(45) Date of publication and mention of the grant of the patent: **17.01.2001**
(21) Application number: 95301505.4
(22) Date of filing: 08.03.1995
(51) Int. Cl.: G02B 5/02, G02B 27/48

(54) **A method of manufacturing a diffuser and a diffuser**
Verfahren zur Herstellung eines Diffusors und Diffusor
Méthode de fabrication d'un diffuseur et diffuseur

(30) Priority: 10.03.1994 GB 9404723
(43) Date of publication of application: 13.09.1995
(73) Proprietor: SHARP KABUSHIKI KAISHA, Osaka-shi, Osaka-fu 545-0013 (JP)
(72) Inventor: Phillips, Nicholas J., Loughborough University, Leicestershire (GB); Wang, Ce, 1 Shizi Street, Suzhou 215006 (CN); Ezra, David, Brightwell-cum-Sotwell, Oxon. OX10 0RI (GB)
(74) Representative: Robinson, John Stuart

(56) References cited:
- EP-A- 0 294 122
- EP-A- 0 479 490
- WO-A-94/29768
- GB-A- 1 499 135
- OPTICS AND SPECTROSCOPY, vol. 68, no. 2, 1 February 1990 pages 244-246, XP 000171812 BRUI V P ET AL 'USE OF A SPECKLEGRAM AS A DIFFUSELY SCATTERING SCREEN IN HOLOGRAM RECORDING'
- N.J. PHILLIPS ET AL.: "Experimental techniques for the evaluation of light-induced microlens formation in photopolymers", SPIE MINIATURE AND MICRO-OPTICS , , 1992, vol. 1751, no. , pages 33 to 46
- N.J. PHILLIPS ET AL.: "Micro-optic studies using photopolymers", SPIE MINIATURE AND MICRO-OPTICS: FABRICATION AND SYSTEM APPLICATIONS, , 1991, vol. 1544, no. , pages 10 to 21

## Description

This invention relates to a method of manufacturing a diffuser and to a diffuser manufactured by such a method.

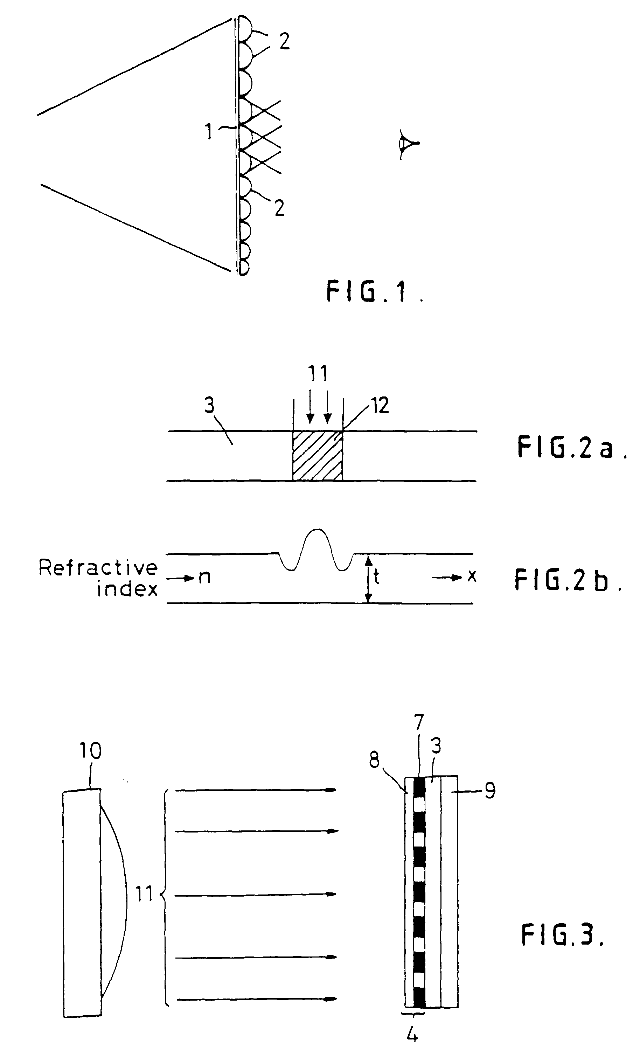

In general, a diffuser is formed by an object which deflects incident light in some suitable way so as to allow an observer to see light from any part of the object at his viewpoint. One particular example of a diffuser is shown in Figure 1. It consists of a screen 1 which has an array of microlenses 2 formed on one surface. Each microlens 2 focuses or deflects light incident on the screen at a point near the plane of the diffuser; an observer will see the array of microlenses 2 as a diffusing surface.

GB 2 261 100 discloses a scatter film diffuser for back-illumination of a display. A negative is made by simulating the display lighting conditions and a positive is made photographically from the negative by contact exposure.

GB 2 113 868 discloses a technique for forming diffraction phase structures by recording an interference pattern. Dielectric microballs in a polymerisation liquid distribute themselves spatially in accordance with the pattern and are then fixed by ultraviolet photopolymerisation.

EP 0 409 396 and EP 0 392 868 disclose similar techniques for producing a diffuser. A light control plate is made by irradiating a photopolymer through a mask having a light scattering pervious pattern.

The light scattering pattern is made by shot-blasting a glass screen through a suitable mask. This technique allows diffusers to be produced having different regions which diffuse light incident at different angles.

EP 0 258 994 discloses a technique using photopolymers for making regular microlens arrays.

US 4 336 978 discloses a method of forming a diffuser without using an optical mask. A speckle pattern is formed in silver halide which, after processing including bleaching, forms a diffuser having some variation in refractive index but only of a very small magnitude. The opaque regions of the silver halide reduce the light output so that the resulting diffuser is relatively inefficient. Because of the limited variations in refractive index, there is relatively little light diffusion so that the efficiency of diffusion reduces substantially with off-axis viewing.

A photopolymeric material is a material whose optical and/or chemical properties are changed when it is irradiated. Examples of such materials are the range of variable index monomers produced by DuPont, such as HRF150 and HRF500. A photopolymer is initially not polymerised. As shown in Figure 2(a), if a layer of photopolymeric material 3 having a thickness of, for example, 10-100µm is irradiated by radiation 11, partial polymerisation occurs in an irradiated region 12 of the photopolymer 3. Monomer diffuses into the irradiated region from adjacent non-irradiated regions, and there is a consequent volumetric change in the refractive index across the irradiated region of the photopolymer.

The change in refractive index across the irradiated region leads to the formation of a graded index (GRIN) lens. The properties of GRIN lenses formed in photopolymers are discussed in Proc. SPIE, Vol 1751, pages 33-46, 1992.

Irradiation of a photopolymeric material can also result in changes in the thickness of the material in the irradiated regions, for example if the irradiation is carried out using a mask having surface relief. Such thickness variations could provide a further focusing mechanism, which will supplement the GRIN focusing.

Once the changes in the refractive index (and possibly the thickness) have been induced, the photopolymer is normally subjected to intense blanket irradiation. This completely polymerises the photopolymer, and "fixes" the variations in the refractive index and thickness.

Methods of producing a diffuser consisting of an array of microlenses by selectively illuminating a photopolymer are described in EP-A-0 294 122 and Proc. SPIE, Vol 1544, pages 10-21, 1991. As shown in Figure 3 of the accompanying drawings, the methods include the step of illuminating a photopolymeric material 3 through a mask 4.

In one prior art method, the mask is made using a high resolution printer to print a pattern of dots on a substrate. The substrate is then processed to produce a mask having an array of transparent apertures on a black background.

GB 2 206 979 and corresponding EP-A-0294122 discloses a method of making a diffuser by forming GRIN lenses in a photopolymeric material. An essentially regular array of lenses is formed but with some randomness in the relative positioning of the lenses. A difficulty with this technique is that it is very difficult to make with any degree of accuracy such a randomised regular array. The photopolymeric material is irradiated through a mask and this patent suggests that monomer will diffuse into irradiated regions from adjacent non-irradiated regions to form GRIN lenses having diameters of the order of 10-30 micrometers.

The strength of a GRIN lens will increase as the diameter of the lens decreases, if the change in refractive index is constant. In addition, for a GRIN lens to be formed, the monomer must diffuse across a distance equal to a substantial fraction of the diameter of the lens. If the irradiated region is too large, the monomer is unable to diffuse sufficiently to enable the formation of a true GRIN lens (in which the refractive index increases smoothly towards the centre of the feature). Thus, it is quite impossible to make microlenses having diameters of 10 to 30 micrometers as suggested in GB 2 206 979 mentioned above.

For the above reasons, it is desirable to make the lenses small, for example a few µm in diameter. However, as the size of the microlenses is reduced, the manufacture of the mask becomes more difficult.

For example, in the prior art method in which the mask is recorded by focusing spots of light onto a substrate, the depth of focus decreases as the size of the spot decreases. A very fine spot may well require the use of an auto-focus technique if a large mask is required. Furthermore writing a large array of fine spots is a very slow process.

Moreover, it is necessary that the pattern of holes in the mask has some degree of randomness to prevent collective diffraction effects arising in the resultant diffuser. The need to introduce this randomness into the process of manufacturing the mask complicates the process; this problem worsens as the size of the microlenses decreases.

WO 94/29768 discloses a technique in which a mask is formed by recording a speckle pattern on a recording medium and exposing a photopolymerisable material through the mask. This document is principally concerned with forming the speckle pattern by means of a fibre optic plate, although there is some mention of using a ground glass plate. However, no indication is given in this document of the size of the features produced in the photopolymerisable material.

According to the present invention, there is provided a method of making a diffuser, comprising the steps of: recording a speckle pattern on a recording medium to create an optical mask; disposing the optical mask adjacent a photopolymerisable material comprising a monomer which diffuses into irradiated regions of the photopolymeric material from adjacent non-irradiated regions; and irradiating the photopolymeric material through the optical mask so as to form changes in refractive index of the photopolymeric material forming graded refractive index lenses corresponding to the speckle pattern, wherein the irradiation and the size of transparent features of the speckle pattern of the optical mask are such that the monomer diffuses a distance of at least one half of the lateral extent of each of the graded refractive index lenses and wherein the lateral extent of each of the graded refractive index lenses is less than 2 micrometres.

It is advantageous for the optical mask to have high contrast. This provides a high gradient which results in better diffusion of the monomer.

By forming a speckle pattern mask and irradiating the photopolymeric material therethrough, it is possible to form a mask whose feature size is sufficiently small to allow a random speckle pattern of graded refractive index lenses to be formed by migration of monomer. A speckle pattern, which is formed when a coherent light source is scattered from a diffuse surface ("Optics" by E. Hecht, 1987, pp592-3), is inherently random. Collective diffraction effects in the diffuser are therefore eliminated. A speckle patter can produce smaller features than are obtainable by conventional focusing optics.

The lateral extent of each lens is preferably less than one micrometres.

A speckle pattern with transparent features of the order of one or two micrometers or less can easily be recorded to form a mask which can then be used to control irradiation of a photopolymeric material so that the monomer contained therein can diffuse sufficiently to form graded refractive index lenses. This allows diffusers to be made having high efficiency (i.e. relatively low light loss), because of the absence of opaque regions, combined with wide dispersion characteristics. By forming the mask with relatively small speckled transparent features and controlling irradiation through the mask, the lenses can be formed efficiently and relatively rapidly so that the method may be used for mass production of very high quality diffusers.

The dimensions of the holes in the mask can be made comparable with the wavelength of the light used to form the speckle pattern. Furthermore, the use of a speckle pattern to produce the mask avoids the need for precise focusing during the mask manufacture, as a speckle pattern has an effectively unlimited spatial extent.

The speckle pattern can be produced either by reflection or transmission of the coherent light. In a preferred embodiment, the speckle pattern is created using an optically diffuse screen, for example a ground glass screen. In a particularly preferred embodiment, the optically diffuse screen is asymmetric. Such a screen produces a speckle pattern with speckles whose mean size in one direction is different from their mean size in an orthogonal direction and this, in turn, means that the apertures in the resultant mask are anisotropic. Such a mask is useful where a diffuser is required, for example, to have a wide lateral field of view but need not have a wide vertical field of view.

In a preferred embodiment, the light source used to irradiate the material is a source of ultra-violet light. This has the advantage that the material need not contain a dye sensitive to visible light, and can therefore be substantially transparent and colourless in most of the visible spectrum. However, if the material is sensitive to the visible spectrum, visible light can be used.

The recording medium may have a pattern of surface relief which corresponds to the speckle pattern so as to allow a pattern of surface relief to develop in the photopolymeric material in registration with the graded refractive index lenses when the recording medium is in contact with the photopolymeric material. The radiation-induced migration of the monomer tends to cause surface relief corresponding to the speckle pattern to be produced. The surface relief of the recording medium provides space to allow this surface relief to be produced in the photopolymeric material.

Preferred embodiments of the present invention will now be described by way of example with reference to the accompanying drawings, in which:-
Figure 1 is a schematic view of a diffuser;
Figure 2(a) is a schematic view showing the illumination of a photopolymeric material;
Figure 2(b) shows the refractive index and thickness of the photopolymer of Figure 2(a) after illumination;
Figure 3 is a schematic view showing how the diffuser is produced;
Figure 4(a) shows one method of producing a speckle pattern; and
Figure 4(b) shows another method of producing a speckle pattern.

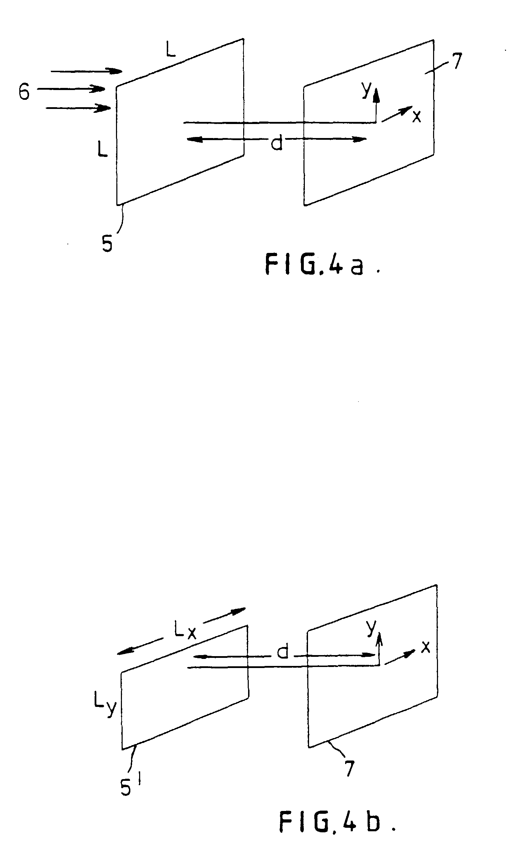

Figure 4(a) illustrates one method of producing a speckle pattern. A square ground glass screen 5 is illuminated by coherent light 6, for example produced by passing a laser beam through an expansion lens and a collimator. A speckle pattern is produced and is recorded on a recording medium 7. The speckles formed on the recording medium 7 have a mean size given by:

δx = δy = λₐd/L (1)

In Equation (1), λₐ is the wavelength of the light 6, d is the distance between the screen 5 and the recording medium 7, and L is the height and width of the screen 5.

A speckle pattern is a stationary interference pattern of coherent waves. Such interference patterns have a large spatial extent and the speckle pattern is sharply defined in the recording medium 7, regardless of the distance d between the screen 5 and the recording medium 7.

The recording medium 7, which is mounted on a transparent substrate 8, can be, for example, a silver halide and gelatin layer, or a layer of photoresist on chromium on a glass substrate. The speckle pattern is recorded in the recording medium 7, which is then processed using known techniques so as to form a mask 4 having a randomly disposed array of transparent apertures on a black background.

Figure 4(b) illustrates an alternative method of producing a speckle pattern. This method is similar to that illustrated in Figure 4(a), except that a rectangular ground glass screen 5' is used. The mean size of the speckles is now given by the following two equations:

δx = λₐd/Lₓ (2)

δy = λₐd/L_{y} (3).

The speckles are anisotropic, and a mask having randomly disposed anisotropic apertures is produced.

The process for forming the diffuser is illustrated in Figure 3. The mask 4 manufactured as described above is placed in contact with a layer of photopolymeric material 3 supported on a substrate 9. The mask is then irradiated using a source 10 of directed, but not necessarily coherent, light 11. Lenses are formed in the photopolymeric material 3 corresponding to the apertures in the mask 4.

If the mask 4 is not flat, the photopolymeric material 3 shows surface relief, as a result of monomer migration due to irradiation. For example, surface relief could arise on a silver halide mask, during the development, bleaching or fixing process. In this case, focusing can occur due both to the volumetric change in refractive index across the irradiated regions and to the thickness variations.

If the mask, however, is flat, the photopolymer does not exhibit surface relief, as it is sandwiched between the mask and the substrate. In this case, there may be some inhibition of monomer migration. The only focusing mechanism will be the volumetric change in refractive index across the irradiated regions.

### Example

A ground glass screen was illuminated by light of 514nm wavelength from an Argon laser. The resultant speckle pattern was recorded on a sheet of Agfa Gavaert Millimask material supported by a glass substrate and placed a few cm from the ground glass screen.

The sheet of Millimask material was first developed in Agfa developer type G284C. It was then reversed processed according to the usual Agfa procedure. This produced a mask having a random array of transparent apertures on a black background.

A 100µm thick sheet of the DuPont photopolymer HRF 150 supported by a Mylar substrate was then laminated to the mask. The mask was then exposed to ultra-violet light, of wavelength 365nm, to produce an array of microlenses (graded index microstructures) in the laminated polymer.

## Claims

1. A method of manufacturing a diffuser, comprising the steps of:
recording a speckle pattern on a recording medium (7) to create an optical mask (4); disposing the optical mask (4) adjacent a photopolymeric material (3) comprising a monomer which diffuses into irradiated regions (12) of the photopolymeric material (3) from adjacent non-irradiated regions; and irradiating the photopolymeric material (3) through the optical mask (4) so as to form changes in refractive index of the photopolymeric material (3) forming graded refractive index lenses corresponding to the speckle pattern, wherein the irradiation and the size of transparent features of the speckle pattern of the optical mask (4) are such that the monomer diffuses a distance of at least one half of the lateral extent of each of the graded refractive index lenses, and wherein the lateral extent of each of the graded refractive index lenses is less than 2 micrometres.

2. A method as claimed in Claim 1, characterised in that the lateral extent of each of the graded refractive index lenses is less than 1 micrometre.

3. A method as claimed in Claim 1 or 2, characterised in that the speckle pattern is created using an optically diffuse screen (5).

4. A method as claimed in Claim 3, characterised in that the optically diffuse screen (5) is a ground glass screen.

5. A method as claimed in Claim 3 or 4, characterised in that the optically diffuse screen (5) is asymmetric.

6. A method as claimed in any one of the preceding claims, characterised in that the photopolymeric material is irradiated with ultra-violet light.

7. A method as claimed in any one of the preceding claims, characterised in that the recording medium (7) comprises a silver halide.

8. A method as claimed in any one of the preceding claims, characterised in that the recording medium (7) comprises a layer of photoresist on a layer of chromium.

9. A method as claimed in any one of the preceding claims, characterised in that the recording medium (7) has a pattern of surface relief which corresponds to the speckle pattern so as to allow a pattern of surface relief to develop in the photopolymeric material (3) in registration with the graded refraction index lenses when the recording medium (7) is in contact with the photopolymeric material (3).

## Patentansprüche

1. Verfahren zum Herstellen eines Diffusors, das die folgenden Schritte aufweist: Aufzeichnen eines Speckle- oder Fleckmusters auf einem Aufzeichnungsträger (7) zum Erzeugen einer optischen Maske (4); Anordnen der optischen Maske (4) angrenzend an ein photopolymeres Material (3), das ein Monomer enthält, das von benachbarten unbestrahlten Bereichen in bestrahlte Bereiche (12) des photopolymeren Materials (3) diffundiert; und Beleuchten des photopolymeren Materials (3) durch die optische Maske (4) hindurch, um Änderungen des Brechungsindex des photopolymeren Materials (3) zu erzeugen, wodurch dem Fleckmuster entsprechende Linsen mit Brechungsindexgradation ausgebildet werden, wobei die Bestrahlung und die Größe der transparenten Einzelheiten des Fleckmusters der optischen Maske (4) dergestalt sind, dass das Monomer einen Weg diffundiert, der mindestens die Hälfte der Quererstreckung jeder der Linsen mit Brechungsindexgradation ist, und wobei die Quererstreckung jeder der Linsen mit Brechungsindexgradation weniger als 2 Mikrometer beträgt.

2. Verfahren nach Anspruch 1, **dadurch gekennzeichnet, dass** die Quererstreckung jeder der Linsen mit Brechungsindexgradation weniger als 1 Mikrometer beträgt.

3. Verfahren nach Anspruch 1 oder 2, **dadurch gekennzeichnet, dass** das Fleckmuster unter Verwendung einer optisch diffusen Scheibe (5) erzeugt wird.

4. Verfahren nach Anspruch 3, **dadurch gekennzeichnet, dass** die optisch diffuse Scheibe (5) eine geschliffene Glasscheibe ist.

5. Verfahren nach Anspruch 3 oder 4, **dadurch gekennzeichnet, dass** die optisch diffuse Scheibe (5) asymmetrisch ist.

6. Verfahren nach einem der vorstehenden Ansprüche, **dadurch gekennzeichnet, dass** das photopolymere Material mit ultraviolettem Licht bestrahlt wird.

7. Verfahren nach einem der vorstehenden Ansprüche, **dadurch gekennzeichnet, dass** der Aufzeichnungsträger (7) ein Silberhalogenid enthält.

8. Verfahren nach einem der vorstehenden Ansprüche, **dadurch gekennzeichnet, dass** der Aufzeichnungsträger (7) eine Photoresistschicht auf einer Chromschicht aufweist.

9. Verfahren nach einem der vorstehenden Ansprüche, **dadurch gekennzeichnet, dass** der Aufzeichnungsträger (7) ein dem Fleckmuster entsprechendes Oberflächenreliefmuster aufweist, um es zu ermöglichen, dass sich im photopolymeren Material (3) ein Oberflächenreliefmuster in Deckung mit den Linsen mit Brechungsindexgradation ausbildet, wenn der Aufzeichnungsträger (7) in Kontakt mit dem photopolymeren Material (3) steht.

## Revendications

1. Procédé de fabrication d'un diffuseur, comprenant les étapes consistant à : enregistrer une configuration tachetée sur un support d'enregistrement (7) afin de créer un masque optique (4) ; disposer le masque optique (4) de façon adjacente à un matériau photopolymère (3) comprenant un monomère qui se diffuse dans des régions irradiées (12) du matériau photopolymère (3) à partir de régions adjacentes non irradiées ; et à irradier le matériau photopolymère (3) à travers le masque optique (4) de façon à obtenir des variations de l'indice de réfraction du matériau photopolymère (3) formant des lentilles à gradient d'indice de réfraction correspondant à la configuration tachetée, procédé dans lequel l'irradiation et la dimension des éléments transparents de la configuration tachetée du masque optique (4) sont telles que le monomère se diffuse sur une distance au moins égale à la moitié de l'étendue latérale de chacune des lentilles à gradient d'indice de réfraction, et dans lequel l'étendue latérale de chacune des lentilles à gradient d'indice de réfraction est inférieure à 2 microns.

2. Procédé selon la revendication 1, caractérisé en ce que l'étendue latérale de chacune des lentilles à gradient d'indice de réfraction est inférieure à 1 micron.

3. Procédé selon la revendication 1 ou la revendication 2, caractérisé en ce que la configuration tachetée est créée en utilisant un écran diffusant la lumière (5).

4. Procédé selon la revendication 3, caractérisé en ce que l'écran diffusant la lumière (5) est un écran en verre dépoli.

5. Procédé selon la revendication 3 ou la revendication 4, caractérisé en ce que l'écran de diffusion de lumière (5) est asymétrique.

6. Procédé selon l'une quelconque des revendications précédentes, caractérisé en ce que le matériau photopolymère est irradié à l'aide de lumière ultraviolette.

7. Procédé selon l'une quelconque des revendications précédentes, caractérisé en ce que le support d'enregistrement (7) se compose d'un halogénure d'argent.

8. Procédé selon l'une quelconque des revendications précédentes, caractérisé en ce que le support d'enregistrement (7) se compose d'une couche de photorésist appliquée sur une couche de chrome.

9. Procédé selon l'une quelconque des revendications précédentes, caractérisé en ce que le support d'enregistrement (7) présente une configuration de surface à relief qui correspond à la configuration tachetée afin de permettre à une configuration de surface à relief de se développer dans le matériau photopolymère (3) de façon à coïncider avec les lentilles à gradient d'indice de réfraction lorsque le support d'enregistrement (7) est en contact avec le matériau photopolymère (3).
